# EUROPÄISCHE PATENTANMELDUNG

(11) **EP 3 961 333 A1**
(43) Veröffentlichungstag der Anmeldung: **02.03.2022**
(21) Anmeldenummer: 20192353.9
(22) Anmeldetag: 24.08.2020
(51) Int. Cl.: G05B 23/02

(54) **SYSTEM UND VERFAHREN ZUR BESTIMMUNG EINER URSACHE EINER BETRIEBSANOMALIE EINER MASCHINE SOWIE COMPUTERPROGRAMM UND ELEKTRONISCH LESBARER DATENTRÄGER**

(71) Anmelder: Siemens Aktiengesellschaft, 80333 München (DE)
(72) Erfinder: Deeg, Christian, 90518 Altdorf (DE); Leipold, Michael, 90491 Nürnberg (DE); Manger, Matthias, 90762 Fürth (DE); Wacker, Bernd, 91074 Herzogenaurach (DE)

(57) **Zusammenfassung**

Die Erfindung betrifft ein Verfahren, ein System, ein Computerprogramm und einen Datenträger. In dem Verfahren werden Maschinenparameter durch zumindest einen Sensor (24) der Maschine (12) erfasst (S10), die Betriebsanomalie durch die erfassten Maschinenparameter festgestellt (S12) und Umgebungsparameter aus zumindest einer externen Datenquelle (28) und die erfassten Maschinenparameter durch eine Recheneinrichtung abgerufen (S14), wobei die Umgebungsparameter zumindest in Abhängigkeit eines Ortes der Maschine und/oder einer Messzeit der Maschinenparameter gefiltert werden. Des Weiteren wird zumindest eine Korrelation zwischen den Maschinenparametern, den gefilterten Umgebungsparametern und der Betriebsanomalie mittels eines Korrelationsmodells durch die Recheneinrichtung (14) ermittelt (S16) und die Ursache der Betriebsanomalie anhand der zumindest einen durch das Korrelationsmodell ermittelten Korrelation bestimmt (S18).

## Beschreibung

Die Erfindung betrifft ein Verfahren zur Bestimmung einer Ursache einer Betriebsanomalie einer Maschine, ein System mit einer Maschine und einer Recheneinrichtung, ein Computerprogramm, welches direkt in einem Speicher einer Recheneinrichtung ladbar ist, und einen elektronisch lesbaren Datenträger mit darauf gespeicherten Steuerinformationen für ein Computerprogramm.

Eine Diagnose von Schäden oder einem Verschleiß an einer Maschine, insbesondere an einem Antriebssystem, wird durch unbekannte externe Einflüsse erschwert. Diese externen Ursachen können in Anomalien zu finden sein, dessen Ursache von der Maschine nicht gemessen wird, da die Maschine nur über eine limitierte Anzahl von Sensoren verfügt und nicht alle Umgebungsparameter berücksichtigt werden können. Unter Umständen können auch vorhandene Sensoren der Maschine falsche oder keine Werte liefern.

Umgebungsparameter beziehungsweise externe Parameter sind in der Regel bei einer Diagnose einer Maschine unbekannt. Umgebungsparameter sind zum Beispiel Umgebungsbedingungen wie Luftfeuchtigkeit, Hitze, Wettereinflüsse, Einflüsse von externen Maschinen wie zum Beispiel Vibrationen, Explosionen und/oder Einwirkungen, die nicht von der eigentlichen Aufgabe der Maschine herrühren. Eine Betriebsanomalie besteht in Maschinenparametern, das heißt Messwerten, die nicht typisch sind. Diese Anomalien können tatsächliche Werte sein oder auch von Sensorfehlern herrühren. So kann ein defekter Sensor eine zu hohe Temperatur anzeigen, die es in Wirklichkeit nicht gibt.

Da ein Hersteller der Maschinen zum überwiegenden Teil nicht weiß, wie die Maschinen angewendet werden, wo sie stehen und unter welchen Bedingungen sie betrieben werden, ist eine Bestimmung einer Ursache einer Betriebsanomalie häufig erschwert und bisher nur durch manuelle investigative Nachforschungen zu bestimmen.

Die Aufgabe der vorliegenden Erfindung ist es, eine Ursache einer Betriebsanomalie einer Maschine zu bestimmen.

Diese Aufgabe wird erfindungsgemäß durch den Gegenstand der unabhängigen Patentansprüche gelöst. Vorteilhafte Ausgestaltungen und Weiterbildungen der Erfindung sind in den abhängigen Patentansprüchen, der nachfolgenden Beschreibung sowie den Figuren angegeben.

Die Erfindung basiert auf der Erkenntnis, dass durch eine oder mehrere Korrelationen von Maschinenparametern mit Umgebungsparametern Aussagen zu der Betriebsanomalie getroffen werden können, beispielsweise ob die Maschine in seinem bestimmungsgemäß designten Arbeitsbereich betrieben wird oder nicht und ob sie bestimmungsgemäß aufgestellt wurde oder nicht. Durch die Verwendung von Umgebungsparametern kann eine fehlende Information über die Betriebsanomalie ergänzt werden, wodurch eine Ursachenbestimmung ermöglicht werden kann.

Durch die Erfindung ist ein Verfahren zur Bestimmung einer Ursache einer Betriebsanomalie einer Maschine bereitgestellt. Eine Maschine kann ein Antriebssystem wie beispielsweise ein Motor oder ein Generator mit einer gekoppelten Arbeitsmaschine im industriellen Umfeld sein. Generell kann es insbesondere ein elektrischer, pneumatischer und/oder hydraulischer Antrieb sein. Auch kann das Verfahren für einzelne Bauteile der Maschine angewendet werden, insbesondere für eine Steuerung der Maschine.

Das Verfahren umfasst ein Erfassen von Maschinenparametern durch zumindest einen Sensor der Maschine, ein Feststellen der Betriebsanomalie durch die erfassten Maschinenparameter und ein Abrufen von Umgebungsparametern aus zumindest einer externen Datenquelle sowie der erfassten Maschinenparameter durch eine Recheneinrichtung, wobei die Umgebungsparameter zumindest in Abhängigkeit eines Ortes der Maschine und/oder einer Messzeit der Maschinenparameter gefiltert werden.

Mit anderen Worten weist die Maschine zumindest einen Sensor auf, mit dem Maschinenparameter, das heißt Betriebsdaten, gemessen werden können. Der Sensor kann beispielsweise ein optischer, elektrischer, akustischer und/oder mechanischer Sensor sein, der einen bestimmungsgemäßen Betrieb der Maschine überwachen kann. Vorzugsweise sind mehrere Sensoren vorgesehen, die eine Vielzahl von Maschinenparametern überwachen oder erfassen. Mittels dieser erfassten Maschinenparameter kann die Betriebsanomalie erkannt und festgestellt werden.

Die Betriebsanomalie kann hierbei eine Fehlermeldung oder ein gemessener Maschinenparameter sein, der nicht typisch für den Betrieb der Maschine ist. Die erfassten Maschinenparameter können zusammen mit Umgebungsparametern aus zumindest einer externen Datenquelle von einer Recheneinrichtung zur weiteren Verarbeitung abgerufen werden. Vorzugsweise kann die Recheneinrichtung auch die Maschine veranlassen, die Maschinenparameter zu messen und an die Recheneinrichtung zu senden. Des Weiteren kann vorzugsweise vorgesehen sein, dass die Recheneinrichtung die Betriebsanomalie aus den erfassten Maschinenparametern feststellt, beispielsweise indem die Maschinenparameter auf eine Einhaltung von vorgegebenen Arbeitsbereichen überprüft werden.

Die externe Datenquelle kann eine Rechnerwolke (Cloud Computing) sein, die einen oder mehrere Rechner und/oder Server umfasst, die makroskopische Daten der Umgebung aufnehmen, insbesondere durch maschinenexterne Sensoren. Vorzugsweise können die Umgebungsparameter aus öffentlichen oder externen Datenbanken und Informationsquellen abgerufen werden, die Wetterinformationen, Erdbebeninformationen, wirtschaftliche Informationen wie zum Beispiel lokale Energiekosten, Informationen der Energieversorger über Netzprobleme und eine Versorgungszuverlässigkeit anzeigen können. Auch können Informationen aus zugänglichen sozialen Netzwerken bezogen werden, aus denen eine Information über die Umgebung der Maschine hergeleitet werden kann.

Um eine Anzahl der Umgebungsparameter für eine weitere Verarbeitung durch die Recheneinrichtung einzuschränken, können die Umgebungsparameter zumindest in Abhängigkeit eines Ortes der Maschine und/oder einer Messzeit der Maschinenparameter gefiltert werden. Das bedeutet, dass die Recheneinrichtung die Umgebungsparameter zunächst zeitlich synchronisieren sowie homogenisieren kann und für eine weitere Verarbeitung einen Datenbestand der Recheneinrichtung anreichern kann. Mit Homogenisieren ist die Filterung nach dem Ort der Maschine und/oder der Messzeit der Maschinenparameter gemeint. Die Homogenisierung kann jedoch auch eine Parameter- bzw. Datenbereinigung nach einer Datenqualität, eine Standardisierung der Daten und ein Entfernen von Duplikaten umfassen. Die Filterung des Ortes und/oder der Messzeit kann hierbei auf die Art der Umgebungsparameter in geeigneter Weise angepasst sein.

Nach dem Abrufen der Umgebungsparameter folgt als Verfahrensschritt ein Ermitteln zumindest einer Korrelation zwischen den Maschinenparametern, den gefilterten Umgebungsparametern und der Betriebsanomalie mittels eines Korrelationsmodells durch die Recheneinrichtung und ein Bestimmen der Ursache der Betriebsanomalie anhand der zumindest einen durch das Korrelationsmodell ermittelten Korrelation. Das heißt, dass durch die Recheneinrichtung überprüft wird, ob zwischen den Maschinenparametern und den gefilterten Umgebungsparametern eine Korrelation zu der Betriebsanomalie gefunden werden kann und falls eine solche Korrelation gefunden wird, kann daraus die Ursache der Betriebsanomalie abgeleitet werden. Hierfür kann vorzugsweise ein Korrelationsmodell bereitgestellt sein, in dem bekannte Korrelationen modelliert sind sowie unbekannte Korrelationen durch statistische Analysen ermittelt werden können. Das heißt, dass für das Korrelationsmodell bekannte Zusammenhänge und/oder Beziehungswissen einfließen können, die aus historischen Daten bekannt sind. Mit anderen Worten kann das Korrelationsmodell auf Basis eines Vergleichs bisheriger Erfahrungen zusammen mit einem Vergleich neuer Korrelationen aufgebaut sein. Somit können bisherige Erfahrungen, das heißt bekannte Korrelationen, mit neuen Korrelationen angereichert werden, wodurch eine Wahrscheinlichkeit, die Ursache der Betriebsanomalie zu bestimmen, steigt.

Mittels der so gefundenen Korrelation, vorzugsweise mittels mehrerer gefundener Korrelationen, kann die Ursache der Betriebsanomalie verbessert ermittelt werden, vorzugsweise automatisiert anhand der gefundenen Korrelationen. Alternativ oder zusätzlich kann die eine oder mehrere Korrelationen in einem semantischen Netz aufbereitet und visualisiert werden, wobei neue Korrelationen als neue Wissenspfade dargestellt werden können oder bestehende Wissenspfade aufgrund neu gewonnener Erkenntnisse aus der Korrelationsermittlung reduziert werden können, falls keine Korrelation gefunden wird. Das semantische Netz kann vorzugsweise als Vorlage für das Korrelationsmodell dienen.

Aus der erkannten Ursache der Betriebsanomalie kann ein Vorschlag für eine Optimierung und eine Handlungsmaßnahme abgeleitet werden, insbesondere können Prognosen erstellt werden, wie sich die Ursache auf einen Betrieb der Maschine auswirkt. Somit kann auf die Maschine beziehungsweise auf den Aufstellungsort der Maschine, beispielsweise auf die Fabrik, in der die Maschine aufgestellt wurde, eingewirkt werden. Das bedeutet, dass zum Beispiel eine Alarmierung, eine Drosselung oder eine Abschaltung veranlasst werden kann.

Die Recheneinrichtung, mit der die Umgebungsparameter und die Maschinenparameter abgerufen werden und mit der die zumindest eine Korrelation ermittelt wird, kann vorzugsweise ein maschinenexterner Rechner sein, insbesondere ein Server, der in einem Datennetz, beispielsweise dem Internet, bereitgestellt ist.

Durch die Erfindung ergibt sich der Vorteil, dass eine Aussage über eine Ursache einer Betriebsanomalie getroffen werden kann, obwohl die Maschine selber nicht über geeignete Sensoren verfügt, um die Ursache zu erkennen. Somit können verbessert Prognosen und Diagnosen gestellt werden und es können mögliche Schäden an der Maschine im Vorfeld verhindert oder reduziert werden, da man bei einer bekannten Ursache frühzeitig entgegenwirken kann. Zusätzlich kann, falls ein Schaden bereits eingetreten ist, geprüft werden, ob es sich um einen Garantiefall, einen Versicherungsfall oder einen Verschleißfall handelt.

In einer vorteilhaften Ausgestaltung der vorliegenden Erfindung ist vorgesehen, dass die zumindest eine Korrelation durch eine statistische Analyse ermittelt wird. Insbesondere können neue, unbekannte Korrelationen mittels der statistischen Analyse gesucht werden. Vorzugsweise kann die statistische Analyse eine Ausreißererkennung, eine Clusteranalyse, eine Klassifikation der Maschinenparameter und der Umgebungsparameter, eine Assoziationsanalyse und/oder eine Regressionsanalyse umfassen. Vorzugsweise kann die Regressionsanalyse dazu verwendet werden, einen Zusammenhang, das heißt eine Datenmustererkennung, aus einer Minimierung einer vorgegebenen Modellfunktion zu bestimmen. Hierzu kann das Korrelationsmodell eine vorgegebene Funktion aufweisen, die beispielsweise mittels der Methode der kleinsten Quadrate auf Vorliegen einer Korrelation zwischen den Maschinenparametern und den Umgebungsparametern untersucht wird. Durch diese Ausgestaltung ergibt sich der Vorteil, dass unbekannte und neue Korrelationen ermittelt werden können und somit die Ursachenbestimmung der Betriebsanomalie verbessert werden kann.

Vorzugsweise ist vorgesehen, dass das Korrelationsmodell in Abhängigkeit von bekannten Zusammenhängen und/oder bekannten Einschränkungen modelliert wird. Hiermit können beispielsweise für die Ermittlung der zumindest einen Korrelation zugrundeliegende Wissenspfade des Korrelationsmodells reduziert oder gezielt ausgewertet werden, um eine Rechenleistung und Rechenzeit in Grenzen zu halten. Mit anderen Worten können die Maschinenparameter und insbesondere die Umgebungsparameter, die für die Analyse durch die Recheneinrichtung verwendet werden, begrenzt werden, indem auf eine Analyse für Parameter mit bekannten Einschränkungen verzichtet wird und/oder gezielt Parameter mit bekannten Zusammenhängen, das heißt mit bekannten Korrelationen, aus der externen Datenquelle abgerufen werden. Somit können die Daten vor einer Verarbeitung durch die Recheneinrichtung weiter gefiltert werden.

Ferner ist vorteilhaft vorgesehen, dass das Korrelationsmodell durch eine Funktion für maschinelles Lernen angepasst wird, falls für die Ursache der Betriebsanomalie eine neue Korrelation erkannt wird. Insbesondere kann die Funktion für maschinelles Lernen automatisiert das Korrelationsmodell mittels bekannter Zusammenhänge und/oder bekannter Einschränkungen iterativ anpassen und verbessern. Hierdurch ergibt sich der Vorteil, dass die Ermittlung der zumindest einen Korrelation beschleunigt und besonders effizient durchgeführt werden kann.

In einer vorteilhaften Weiterbildung des Verfahrens ist vorgesehen, dass die Ursache der Betriebsanomalie in Abhängigkeit eines vorgegebenen Korrelationsmusters mittels einer künstlichen Intelligenz durch die Recheneinrichtung bestimmt wird, wobei die Maschinenparameter und die Umgebungsparameter auf Vorliegen des vorgegebenen Korrelationsmusters untersucht werden. Das heißt, dass die künstliche Intelligenz die Maschinenparameter und die Umgebungsparameter auf bekannte Korrelationen hin untersucht, die durch das Korrelationsmuster vorgegeben sind. Falls eine Übereinstimmung des Korrelationsmusters gefunden wird, kann die künstliche Intelligenz automatisch die Ursache der Betriebsanomalie feststellen. Die künstliche Intelligenz kann beispielsweise auf einem neuronalen Netzwerk basieren, das die Parameter auf Vorliegen des vorgegebenen Korrelationsmusters hin untersucht. Durch diese Weiterbildung ergibt sich der Vorteil, dass die Erkennung der Ursache der Betriebsanomalie automatisiert durchgeführt werden kann, was zu einer Beschleunigung des Verfahrens beiträgt.

In vorteilhafter Weise ist vorgesehen, dass die Umgebungsparameter von externen Umgebungssensoren gemessen werden. Mit anderen Worten kann die externe Datenquelle Umgebungsparameter sammeln und speichern, die von externen Umgebungssensoren aufgenommen werden. Mit externen Umgebungssensoren sind Sensoren gemeint, die nicht zu der Maschine gehören, sondern beispielsweise zu Einrichtungen in einem Umkreis der Maschine. Als Umgebungssensoren können beispielsweise Wettersensoren bereitgestellt sein, die eine Temperatur, einen Niederschlag beziehungsweise Schneefall und/oder eine Luftfeuchtigkeit messen. Des Weiteren können die Umgebungssensoren Stromsensoren, seismische Sensoren, Sensoren anderer Maschinen oder Fabriken und/oder Gassensoren umfassen. Hierdurch ergibt sich der Vorteil, dass die Sensoren der Maschine durch weitere Umgebungssensoren erweitert werden können, ohne diese in die Maschine einzubauen, wodurch Kosten gespart werden können.

In vorteilhafter Weiterbildung der vorliegenden Erfindung ist vorgesehen, dass in Abhängigkeit der Ursache der Betriebsanomalie ein Steuersignal erzeugt wird, mit dem eine Maschinenfunktion der Maschine oder einer weiteren Maschine angesteuert wird. Mit anderen Worten kann für eine oder mehrere vorgegebene Ursachen der Betriebsanomalie ein jeweilig vorgegebenes Steuersignal erzeugt werden, mit dem die eine oder mehrere Maschinen angesteuert werden können. Beispielsweise kann bei Erkennen der Ursache der Betriebsanomalie ein Steuersignal erzeugt werden, das die Maschine und/oder weitere Maschinen, die sich in der Nähe befinden, drosseln oder abschalten kann. Alternativ oder zusätzlich kann auch eine Alarmierung der Maschine oder einer Fabrik, in der sich die Maschine befindet, durch das Steuersignal ausgelöst werden. Des Weiteren kann durch das Steuersignal auch eine Entwarnung bereitgestellt werden, beispielsweise wenn festgestellt wird, dass es sich bei der Betriebsanomalie um eine für die Maschine unschädliche Ursache handelt. Durch diese Weiterbildung ergibt sich der Vorteil, dass automatisiert schnell auf Betriebsanomalien reagiert werden kann, wodurch Schäden an der Maschine vermieden werden können oder ein Betrieb der Maschine aufrechterhalten werden kann.

Ein weiterer Aspekt der Erfindung betrifft ein System zur Bestimmung einer Ursache einer Betriebsanomalie einer Maschine, mit der Maschine und einer Recheneinrichtung, wobei die Maschine dazu ausgebildet ist, durch zumindest einen Sensor Maschinenparameter zu erfassen und eine Betriebsanomalie durch die erfassten Maschinenparameter festzustellen, wobei die Recheneinrichtung dazu ausgebildet ist, Umgebungsparameter aus zumindest einer externen Datenquelle und die erfassten Maschinenparameter abzurufen, wobei die Umgebungsparameter zumindest in Abhängigkeit eines Ortes der Maschine und/oder einer Messzeit der Maschinenparameter gefiltert werden, zumindest eine Korrelation zwischen den Maschinenparametern, den gefilterten Umgebungsparametern und der Betriebsanomalie mittels eines Korrelationsmodells zu ermitteln und die Ursache der Betriebsanomalie anhand der zumindest einen durch das Korrelationsmodell ermittelten Korrelation zu bestimmen. Die Weiterbildungen des Verfahrens sowie die entsprechenden Vorteile sind jeweils sinngemäß auch auf das erfindungsgemäße System übertragbar. Es gehören also zu der Erfindung auch solche Weiterbildungen des erfindungsgemäßen Verfahrens, welche Ausgestaltungen aufweisen, die hier nicht explizit in der jeweiligen Kombination beschrieben sind, um eine unnötige Redundanz zu vermeiden.

Ein weiterer Aspekt der Erfindung ist ein erfindungsgemäßes Computerprogramm, welches ein erfindungsgemäßes Verfahren auf einer elektronischen Recheneinrichtung implementiert. Das Computerprogramm kann hierbei auch in Form eines Computerprogrammprodukts vorliegen, welches direkt in einen Speicher einer Recheneinrichtung ladbar ist. Das Computerprogrammprodukt weist Programmcodemittel auf, um ein erfindungsgemäßes Verfahren auszuführen, wenn das Computerprogrammprodukt in beziehungsweise durch die Recheneinrichtung ausgeführt wird.

Ein weiterer Aspekt der Erfindung betrifft einen elektronisch lesbaren Datenträger. Dabei umfasst der erfindungsgemäße elektronisch lesbare Datenträger auf ihn gespeicherte elektronisch lesbare Steuerinformationen, welche zumindest ein erfindungsgemäßes Computerprogramm umfassen oder derart ausgestaltet sind, dass sie bei Verwendung des Datenträgers in einer Recheneinrichtung ein erfindungsgemäßes Verfahren durchführen.

Weitere Vorteile, Merkmale und Einzelheiten der Erfindung ergeben sich aus der nachfolgenden Beschreibung bevorzugter Ausführungsbeispiele sowie anhand der Zeichnungen.

Die vorliegende Erfindung wird nun anhand der beigefügten Zeichnungen näher erläutert, in denen zeigen:
- FIG 1: eine schematische Darstellung eines Systems mit einer Maschine und einer Recheneinrichtung gemäß einer beispielhaften Ausführungsform;
- FIG 2: ein Blockdiagramm eines Verfahrens gemäß einer beispielhaften Ausführungsform.

Die nachfolgend näher geschilderten Ausführungsbeispiele stellen bevorzugte Ausführungsformen der vorliegenden Erfindung dar. Sie sind jedoch nicht einschränkend zu sehen.

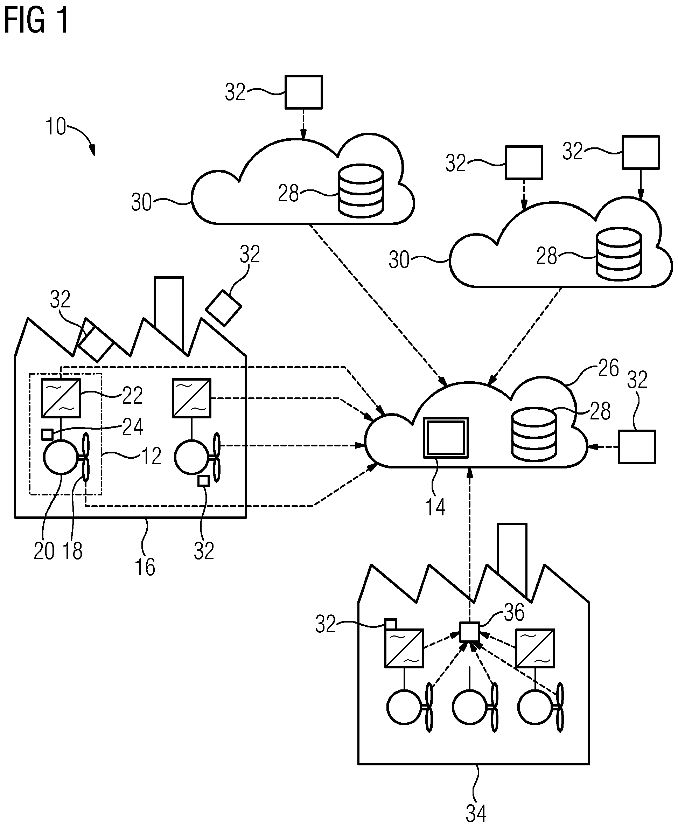

In FIG 1 ist ein System 10 mit einer Maschine 12 und einer Recheneinrichtung 14 gemäß einer beispielhaften Ausführungsform dargestellt. Die Maschine 12 kann in diesem Ausführungsbeispiel in einem Kraftwerk 16 angeordnet sein und beispielsweise eine Antriebsmaschine 18, eine elektrische Maschine 20 und einen Umrichter 22 umfassen. Des Weiteren kann die Maschine 20 zumindest einen Sensor 24 aufweisen, der dazu ausgebildet sein kann, einen oder mehrere Maschinenparameter zu erfassen.

Die Maschinenparameter können Messdaten der Maschine 12 aufweisen, die einen ordnungsgemäßen Betrieb der Maschine 12 überwachen. Insbesondere kann durch die Maschinenparameter eine Betriebsanomalie der Maschine 12 festgestellt werden. Beispielsweise kann durch den Sensor 24 festgestellt werden, dass die Maschine 12 in einem kritischen Temperaturbereich betrieben wird.

Um festzustellen, was die Ursache dieser Betriebsanomalie ist, kann die Recheneinrichtung 14 dazu ausgebildet sein, die Maschinenparameter von der Maschine 12 abzurufen. Vorzugsweise kann die Recheneinrichtung 14 in einer Rechnerwolke 26 bereitgestellt sein, die auf die Maschinenparameter der Maschine 12 zugreifen kann. Zusätzlich kann die Recheneinrichtung 14 dazu ausgebildet sein, Umgebungsparameter aus zumindest einer externen Datenquelle 28 abzurufen. Die eine oder die mehreren externen Datenquellen 28 können Datenbanken umfassen, die beispielsweise in weiteren Rechnerwolken 30 bereitgestellt sein können. Die Umgebungsparameter aus den externen Datenquellen 28 können beispielsweise von externen Umgebungssensoren 32 gemessen werden, wobei externe Umgebungssensoren 32 beispielsweise Sensoren zur Bestimmung des Wetters/Klimas umfassen können und beispielsweise außerhalb des Kraftwerks 16 und/oder innerhalb des Kraftwerks 16 angeordnet sein können. Beispielsweise können die externen Umgebungssensoren 32 auch bei einer weiteren Maschine im Kraftwerk 16 bereitgestellt sein.

Vorzugsweise können die Umgebungsparameter weitere makroskopische Daten umfassen, die in der einen oder den mehreren externen Datenquellen 28 gespeichert sein können. Beispielsweise kann die externe Datenquelle 28 wirtschaftliche Informationen, wie beispielsweise lokale Energiekosten, Informationen der Energieversorger über Netzprobleme und Spannungsschwankungen umfassen und/oder Informationen aus sozialen Netzwerken. Vorzugsweise können auch Umgebungsparameter von einem weiteren Kraftwerk oder einer Fabrik 34 abgerufen werden, wobei Umgebungsparameter der Fabrik 34 beispielsweise über eine Zugangsvorrichtung 36 (Edge Device oder Gateway) bezogen werden können.

Für das Abrufen der Umgebungsparameter aus den externen Datenquellen 28 kann die Recheneinrichtung 14 die Umgebungsparameter zunächst homogenisieren. Das bedeutet, die Rechnereinrichtung 14 kann die Umgebungsparameter zumindest in Abhängigkeit eines Ortes der Maschine 12 und/oder einer Messzeit der Maschinenparameter filtern. Somit können aus den heterogenen Datenquellen 28 diejenigen Umgebungsparameter herausgefiltert werden, für die ein Zusammenhang zu der Anomalie möglich sein kann. Der Ort der Maschine und/oder die Messzeit der Maschinenparameter, kann zum Beispiel in einem Korrelationsmodell auf der Recheneinrichtung hinterlegt sein, wobei das Korrelationsmodell zusätzlich bekannte Zusammenhänge und/oder bekannte Einschränkungen der Umgebungsparameter und der erfassten Maschinenparameter zu der Betriebsanomalie umfassen kann. Somit können für das Korrelationsmodell Daten vorgefiltert werden, wodurch eine Rechenleistung und Rechenzeit der Recheneinrichtung 14 begrenzt werden können.

Die Recheneinrichtung 14 ist ferner dazu ausgebildet, mittels des Korrelationsmodells zumindest eine Korrelation zwischen den Maschinenparametern, den gefilterten Umgebungsparametern und der Betriebsanomalie zu ermitteln. Hierzu kann zum einen nach bekannten Korrelationen gesucht werden, vorzugsweise mittels einer künstlichen Intelligenz, die in Abhängigkeit eines vorgegebenen Korrelationsmusters die Maschinenparameter und die Umgebungsparameter untersucht und bekannte Korrelationen automatisiert findet. Zum anderen kann durch eine statistische Analyse, insbesondere durch eine Regressionsanalyse, eine unbekannte Korrelation ermittelt werden, wobei das Korrelationsmodell durch eine Funktion für maschinelles Lernen bei Finden dieser neuen unbekannten Korrelation angepasst werden kann. Somit kann für nachfolgende Bestimmungen der Ursache der Betriebsanomalie die neue Korrelation als vorgegebenes Korrelationsmuster für die künstliche Intelligenz bereitgestellt werden, wodurch ein Rechenaufwand reduziert werden kann.

Wird zumindest eine Korrelation zwischen den Maschinenparametern, den gefilterten Umgebungsparametern und der Betriebsanomalie erkannt, kann aus dieser Korrelation die Ursache der Betriebsanomalie bestimmt werden. Insbesondere können bei Erkennen der Ursache verschiedene Diagnosen und Prognosen erstellt werden, mit denen Vorschläge zur Optimierung oder Handlungsmaßnahmen bereitgestellt werden können. Besonders bevorzugt kann vorgesehen sein, dass die Recheneinrichtung 14 dazu ausgebildet ist, in Abhängigkeit von der erkannten Ursache der Betriebsanomalie ein Steuersignal zu erzeugen, mit dem eine Maschinenfunktion der Maschine 12 angesteuert werden kann, beispielsweise eine Abschaltung der Maschine, um Schäden zu vermeiden. Alternativ oder zusätzlich können auch weitere Maschinen beispielsweise im Kraftwerk 16 mittels des Steuersignals bei Erkennung der Ursache der Betriebsanomalie angesteuert werden, um auch eine Schädigung dieser Maschinen zu vermeiden. Alternativ kann vorgesehen sein, dass lediglich ein Steuersignal zur Alarmierung bereitgestellt wird, das an die Maschine 12 und/oder das Kraftwerk 16 gesendet werden kann.

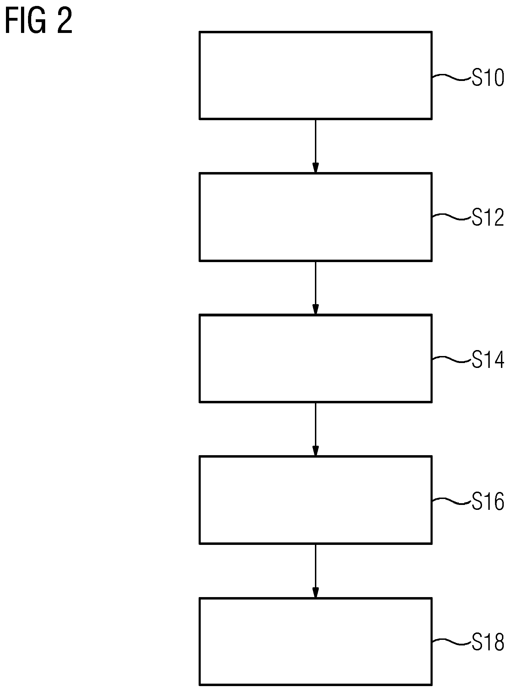

In FIG 2 ist ein Verfahrensdiagramm zur Bestimmung einer Ursache einer Betriebsanomalie einer Maschine 12 gemäß einer beispielhaften Ausführungsform dargestellt. In einem Schritt S10 werden Maschinenparameter durch zumindest einen Sensor 24 der Maschine 12 erfasst. In einem Schritt S12 wird die Betriebsanomalie durch die erfassten Maschinenparameter festgestellt. In einem Schritt S14 werden Umgebungsparameter aus zumindest einer externen Datenquelle 28 und die erfassten Maschinenparameter durch eine Recheneinrichtung 14 abgerufen, wobei die Umgebungsparameter zumindest in Abhängigkeit eines Ortes der Maschine und/oder einer Messzeit der Maschinenparameter gefiltert werden.

In einem Schritt S16 wird zumindest eine Korrelation zwischen den Maschinenparametern, den gefilterten Umgebungsparametern und der Betriebsanomalie mittels eines Korrelationsmodells durch die Recheneinrichtung 14 ermittelt. Schließlich wird in einem Schritt S18 die Ursache der Betriebsanomalie anhand der zumindest einen durch das Korrelationsmodell ermittelten Korrelation bestimmt.

Insbesondere kann das Verfahren einen Benutzer einer Maschine in folgenden Szenarien in vorteilhafter weise unterstützen: Ein Temperatursensor einer Maschine kann sich beispielsweise durch eine Sonneneinstrahlung erwärmen, wodurch beispielsweise ein Einschalten der Maschine durch eine Sicherungsfunktion verhindert werden kann, obwohl keine unzulässige Erwärmung der Maschine vorliegt. Für einen vor Ort befindlichen Operator kann nicht nachvollziehbar sein, ob es sich um einen Fehler des Sensors oder eine Betriebsanomalie handelt. Mittels des Verfahrens kann jedoch eine Korrelation der Erwärmung zu der Sonneneinstrahlung festgestellt werden und der Operator kann bestimmen, dass keine schädliche Ursache vorliegt. In einem anderen Fall kann beispielsweise eine Überflutung zu einer Kühlung führen, das heißt ein Temperatursignal kann niedrig sein, obwohl die Maschine bei Volllast läuft und ein Operator eine höhere Betriebstemperatur erwarten würde. Hierbei kann die Temperatur ungefährlich sein, eine Überflutung könnte jedoch zu einem Wasserschaden an der Maschine führen, wobei der Operator durch diese Kenntnis eine geeignete Maßnahme treffen kann.

Auch kann beispielsweise ein defekter Temperatursensor keine Temperatur anzeigen, wodurch eine Schutzfunktion aufgrund zu hoher Temperaturen in der Maschine nicht ausgelöst wird. Mittels der Umgebungsparameter kann dies jedoch in vorteilhafter Weise erkannt werden und Maßnahmen getroffen werden. Auch können lokal Energiekosten auf Basis von Angebot und Nachfrage schwanken, wobei sich ein Betreiber dazu entschließen kann, die Maschine temporär anzuhalten, was durch wiederholtes Stoppen und Anfahren zu einem erhöhten mechanischen Verschleiß wie auch zu Temperaturzyklen führen kann. Diese und weitere Betriebsanomalien können mittels des Verfahrens erkannt werden und es kann auf die Ursachen eingewirkt werden. Insbesondere kann festgestellt werden, ob es sich um einen Garantiefall, einen Versicherungsfall, einen Verschleißfall oder um einen nicht bestimmungsgemäßen Betrieb der Maschine handelt.

Insgesamt zeigen die Beispiele, wie durch die Erfindung ein kontextbasiertes Expertensystem für Maschinen, insbesondere für Antriebe, bereitgestellt werden kann.

## Patentansprüche

1. Verfahren zur Bestimmung einer Ursache einer Betriebsanomalie einer Maschine (12), mit den Verfahrensschritten:
- Erfassen (S10) von Maschinenparametern durch zumindest einen Sensor (24) der Maschine (12);
- Feststellen (S12) der Betriebsanomalie durch die erfassten Maschinenparameter;
- Abrufen (S14) von Umgebungsparametern aus zumindest einer externen Datenquelle (28) und der erfassten Maschinenparameter durch eine Recheneinrichtung, wobei die Umgebungsparameter zumindest in Abhängigkeit eines Ortes der Maschine und/oder einer Messzeit der Maschinenparameter gefiltert werden;
- Ermitteln (S16) zumindest einer Korrelation zwischen den Maschinenparametern, den gefilterten Umgebungsparametern und der Betriebsanomalie mittels eines Korrelationsmodells durch die Recheneinrichtung (14);
- Bestimmen (S18) der Ursache der Betriebsanomalie anhand der zumindest einen durch das Korrelationsmodell ermittelten Korrelation.

2. Verfahren nach Anspruch 1, wobei die zumindest eine Korrelation durch eine statistische Analyse ermittelt wird.

3. Verfahren nach Anspruch 2, wobei als statistische Analyse eine Regressionsanalyse durchgeführt wird.

4. Verfahren nach einem der vorhergehenden Ansprüche, wobei das Korrelationsmodell in Abhängigkeit von bekannten Zusammenhängen und/oder bekannten Einschränkungen modelliert wird.

5. Verfahren nach Anspruch 4, wobei das Korrelationsmodell durch eine Funktion für maschinelles Lernen angepasst wird, falls für die Ursache der Betriebsanomalie eine neue Korrelation erkannt wird.

6. Verfahren nach einem der vorhergehenden Ansprüche, wobei die Ursache der Betriebsanomalie in Abhängigkeit eines vorgegebenen Korrelationsmusters mittels einer künstlichen Intelligenz durch die Recheneinrichtung (14) bestimmt wird, wobei die Maschinenparameter und die Umgebungsparameter auf Vorliegen des vorgegebenen Korrelationsmusters untersucht werden.

7. Verfahren nach einem der vorhergehenden Ansprüche, wobei die Umgebungsparameter von externen Umgebungssensoren (32) gemessen werden.

8. Verfahren nach einem der vorhergehenden Ansprüche, wobei in Abhängigkeit der Ursache der Betriebsanomalie ein Steuersignal erzeugt wird, mit dem eine Maschinenfunktion der Maschine (12) oder einer weiteren Maschine angesteuert wird.

9. System (10) zur Bestimmung einer Ursache einer Betriebsanomalie einer Maschine (12), mit der Maschine (12) und einer Recheneinrichtung (14), wobei die Maschine (12) dazu ausgebildet ist, durch zumindest einen Sensor (24) Maschinenparameter zu erfassen und eine Betriebsanomalie durch die erfassten Maschinenparameter festzustellen, wobei die Recheneinrichtung (14) dazu ausgebildet ist, Umgebungsparameter aus zumindest einer externen Datenquelle (28) und die erfassten Maschinenparameter abzurufen, wobei die Umgebungsparameter zumindest in Abhängigkeit eines Ortes der Maschine und/oder einer Messzeit der Maschinenparameter gefiltert werden, zumindest eine Korrelation zwischen den Maschinenparametern, den gefilterten Umgebungsparametern und der Betriebsanomalie mittels eines Korrelationsmodells zu ermitteln und die Ursache der Betriebsanomalie anhand der zumindest einen durch das Korrelationsmodell ermittelten Korrelation zu bestimmen.

10. Computerprogramm, welches direkt in einen Speicher einer Recheneinrichtung (14) ladbar ist, mit Programm-Mitteln, um Schritte des Verfahrens nach einem der Ansprüche 1 bis 8 auszuführen, wenn das Programm in der Recheneinrichtung (14) ausgeführt wird.

11. Elektronisch lesbarer Datenträger mit darauf gespeicherten lesbaren Steuerinformationen, welche zumindest ein Computerprogramm nach Anspruch 10 umfassen und derart ausgestaltet sind, dass sie bei Verwendung des Datenträgers in einer Recheneinrichtung (14) ein Verfahren nach einem der Ansprüche 1 bis 8 durchführen.
